(19) Europäisches Patentamt / European Patent Office / Office européen des brevets

(11) **EP 3 443 302 B1**

(12) **EUROPEAN PATENT SPECIFICATION**

(45) Date of publication and mention of the grant of the patent:
**18.05.2022  Bulletin 2022/20**

(21) Application number: **17721061.4**

(22) Date of filing: **13.04.2017**

(51) International Patent Classification (IPC):
**G01C 21/32** (2006.01)      **G08G 1/01** (2006.01)
**G08G 1/0968** (2006.01)    **H04W 4/02** (2018.01)
**G08G 1/0967** (2006.01)    **G09B 29/10** (2006.01)
**G06T 17/05** (2011.01)      **G08G 1/09** (2006.01)

(52) Cooperative Patent Classification (CPC):
**G08G 1/0129; G01C 21/32; G06T 17/05;
G08G 1/01; G08G 1/012; G08G 1/0141;
G08G 1/091; G08G 1/096716; G08G 1/09675;
G08G 1/096775; G08G 1/096827; G08G 1/096883;
G09B 29/106; H04W 4/023;** H04W 4/024;    (Cont.)

(86) International application number:
**PCT/EP2017/058978**

(87) International publication number:
**WO 2017/178609 (19.10.2017 Gazette 2017/42)**

(54) **INTERSECTION MAP MESSAGE CREATION FOR VEHICLE COMMUNICATION**

ERZEUGUNG VON KREUZUNGSKARTENNACHRICHTEN FÜR FAHRZEUGKOMMUNIKATION

CRÉATION DE MESSAGE DE CARTE D'INTERSECTION POUR UNE COMMUNICATION DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.04.2016   US 201615097807**

(43) Date of publication of application:
**20.02.2019   Bulletin 2019/08**

(73) Proprietor: **HERE Global B.V.
5611 ZT Eindhoven (NL)**

(72) Inventors:
 • **XU, Jingwei
   Buffalo Grove, Illinois 60089 (US)**
 • **BERNHARDT, Bruce
   Wauconda, Illinois 60084 (US)**
 • **RADOMY, Samuel
   Chicago, Illinois 60642 (US)**

(74) Representative: **Cohausz & Florack
Patent- & Rechtsanwälte
Partnerschaftsgesellschaft mbB
Bleichstraße 14
40211 Düsseldorf (DE)**

(56) References cited:
**EP-A1- 1 182 611     JP-A- 2001 117 487**

 • **Camp ET AL: "SAE J2735 DSRC Message Dictionnary overview", , 8 March 2012 (2012-03-08), XP055394398, Retrieved from the Internet:
URL:https://www.car-2-car.org/fileadmin/us er_upload/OEM_Workshop_WOB/Message_Dict ion ary_Overview.pdf [retrieved on 2017-07-27]**
 • **"SAE standard J2735_201603 - Dedicated Short Range Communications (DSRC) Message Set Dictionary", SAE STANDARD, SAE, US , vol. J2735_201603 30 March 2016 (2016-03-30), pages 1-267, XP008185270, Retrieved from the Internet:
URL:https://saemobilus.sae.org/content/J27 35_201603/**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
H04W 4/44

**Description**

FIELD

The following disclosure relates to generating a MAP message for roadway intersections, and more particularly to traffic control, autonomous driving and navigation applications using the MAP message for roadway intersections.

## BACKGROUND

In the area of traffic control, autonomous driving and navigation, an intersection plays a critical role for traffic flow management. Among other things, an intersection includes traffic signal(s) that are installed to provide intersection movement state and flow control strategies to increase vehicle capacity through the intersection and to increase safety of the vehicles driving through the intersection. In general, each traffic light in an intersection has an assigned signal phase and timing (SPaT) control strategy. Such information about the intersection may be used by autonomous vehicles, navigation systems, traffic service providers or traffic management agencies to provide additional opportunities utilizing this information.

The Society of Automotive Engineers (SAE) J2735 standard for Dedicated Short Range Communications (DSRC) Message Set Dictionary defines a SPaT format that may be used to describe the current state of a traffic signal system for an intersection and the phases corresponding to the specific lanes in the intersection. This SPaT information may be delivered to a vehicle or navigation system through a DSRC or cellular network as the vehicle is approaching an intersection or is within a certain distance. Unlike SPaT information delivery through cellular network, in which there is some latency due to backend sever processing, a DSRC network is closer to real-time communication. The SAE J2735 standard also defines a MAP message format used to describe the static physical geometry layout of one or more intersections and to convey other types of geographic road information. The MAP message may be used with SPaT information to describe an intersection and the current control state of the intersection in one or more DSRC messages. Traffic signals and traffic signal controllers are also becoming connected devices. For example, the status of the SPaT of the state transitions may be collected in real-time or predicted through engineering analysis. This information may be sent through communications channels to systems that may distribute the information to interested users. Additionally, the intersection MAP message may be pre-cached and stored in a vehicle or as part of a navigation system, or the MAP message may be sent to the participating vehicle as the vehicle approaches the intersection in real-time. EP1182611 A1 discloses a method for automatic preparation of road data in which roads and intersections are expressed by polygons that show accurate agreement with the complicated road shapes on city maps.

## SUMMARY

According to the invention a method for generating a MAP message is provided as set forth in claim 1, an apparatus is provided as set forth in claim 7, and a non-transitory computer readable medium is provided as set forth in claim 8.

In one embodiment, a method for intersection MAP message creation for vehicle communication is provided. The method includes receiving, over a network, map data for an intersection. A processor calculates a reference point location for the intersection from the map data and calculates offset values relative to the reference point location for a plurality of lanes of the intersection from the map data.

In another embodiment, an apparatus for intersection MAP message creation for vehicle communication is provided. An apparatus includes a processor and a memory with computer program code for one or more programs. The memory and computer program code is configured to cause the processor of the apparatus to at least identify a reference point location for an intersection using a plurality of map data. The memory and computer program code is further configured to cause the processor to identify shape point locations for each lane of the intersection using the plurality of map data and to compute offset values for each shape point with respect to the reference point location.

In another embodiment, a non-transitory computer readable medium is provided including instructions that when executed are operable to receive traffic light position data for an intersection and to receive map data comprising road link segment for the intersection. Instructions are also included to register the traffic light position data with the map data, to identify a reference point location for the intersection with respect to the map data using the registered traffic light position data, identify shape point locations for each lane of the intersection using the map data and to compute offset values for each shape point with respect to the reference point location.

## BRIEF DESCRIPTION OF THE DRAWINGS

Exemplary embodiments of the present invention are described herein with reference to the following drawings.

Figure 1 illustrates an example map developer system according to an embodiment.
Figure 2 is an example flowchart for calculating the reference point of an intersection.
Figure 3 illustrates an example of calculating the reference point of an intersection using a polygon.
Figure 4 illustrates an example of calculating the reference point of an intersection using a circle.
Figure 5 is an example flowchart for calculating offset values from the reference point for each lane of the intersection.
Figure 6 illustrates an example of shape points for a road segment link and shape points for each lane of the road segment link.
Figure 7 illustrates an example of calculating offset values for a shape point of a lane of the intersection.
Figure 8 illustrates an example server device according to an embodiment.
Figure 9 illustrates an example flowchart for the server device of Figure 8 according to an embodiment.
Figure 10 illustrates an example mobile device according to an embodiment.
Figure 11 illustrates an example flowchart for the mobile device of Figure 10 according to an embodiment.

## DETAILED DESCRIPTION

According to the SAE J2735 standard, the MAP message provides the road geometry of an intersection and the SPaT message conveys the current or predicted signal indication for movement control in the intersection. The underlying map data for the MAP message must be capable of describing both the simple and complex intersections correctly and precisely, with traffic lights and the specific lane geometry lanes mapped with respect to each other. While the SAE J2735 standard describes the format of the MAP message, the SAE J2735 standard does not specify how to generate the underlying data. Consequently, widely varying interpretations of the same intersections may be generated, often employing error prone methodologies.

An apparatus and method is provided for defining the physical structure of the intersection, including a reference point for the intersection and the lanes leading to and away from the reference point, providing a consistent, accurate, and globally referable map data for the intersection. The apparatus and method may allow traffic service providers, map service providers and other entities to generate a traffic intersection layer service complying with the MAP format and provide messages including consistent and accurate map data for the road network geometry via DSRC and/or cellular networks.

According to one or more of the present embodiments, a reference point for an intersection is calculated. For example, the reference point defines a precise location of an intersection (e.g., via latitude, longitude, altitude). Offset values are also calculated for all drivable lanes to and from the intersection. For example, the offset values define all drivable geometry lanes approaching and/or leaving the intersection are calculated based on the reference point (e.g., as (X, Y, Z) coordinates with respect to the reference point). Various embodiments may generate intersection map data for use as the core component in a MAP message.

The MAP message may be used with a DSRC and/or cellular network to communicate the physical road geometry to a vehicle or for other purposes. For example, an autonomous vehicle or navigation system may utilize the road geometry while driving, or various entities may use the road geometry for a map and/or traffic business purpose. Further, the automotive industry may utilize the MAP message to implement energy saving measures by avoiding the unnecessary vehicle acceleration and deceleration, dynamically adjusting a navigation plan to reduce travel time and to provide safety warnings and alerts at crosswalks. The MAP message may also be used to improve pedestrian safety, such as while crossing an intersection, to provide red light warning systems and to facilitate other mobile user applications.

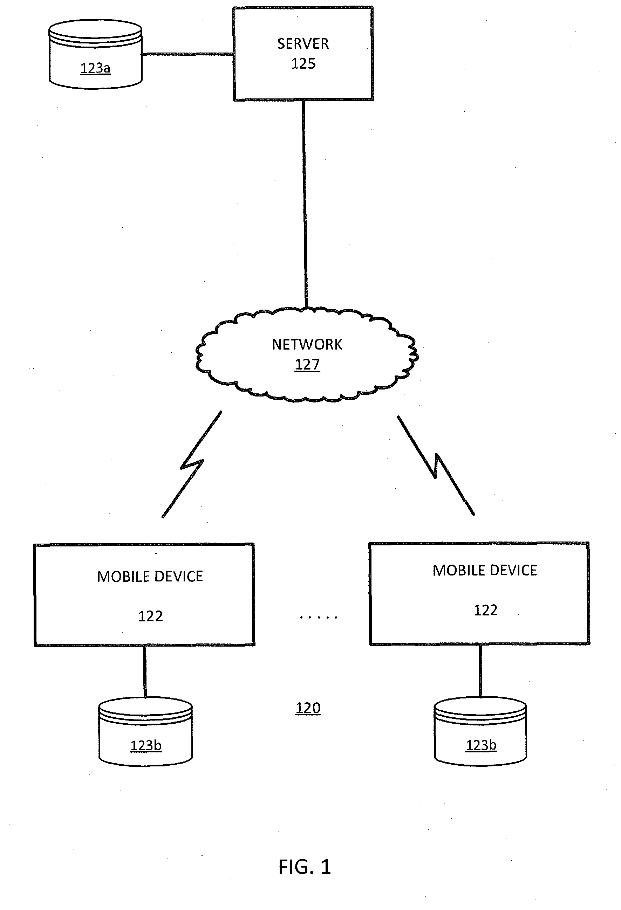

Figure 1 illustrates map developer system according to an embodiment. The system 120 includes mobile devices 122 (e.g., autonomous vehicles, navigation devices and/or assisted driving systems), a server 125 (e.g., a "cloud" server and/or a map developer system) and a network 127 (e.g., a cellular network). The databases 123a and 123b may be map databases including road links, segments and junctions. Additional, different, or fewer components of system 120 may be provided. For example, many varieties of mobile devices 122 may connect with the network 127, including mobile telephones, navigation systems, personal computers, assisted driving vehicles, autonomous vehicles, etc. Assisted driving vehicles may include autonomous vehicles, highly assisted driving (HAD) and advanced driving assistance systems (ADAS). An assisted driving device 122 may be included in the vehicle.

In an embodiment, the server 125 or a mobile device 122 receives traffic light data for an intersection. The traffic light data may include the location of each traffic and each traffic light's signal phase and timing information. This information may be from a distribution source for an intersection or set of intersections. Alternatively, the server 125 or a mobile device 122 identifies the traffic light data for the intersection from the map database 123a or 123b, respectively. Using the traffic light data, the server 125 or a mobile device 122 calculates a reference location for the intersection. Using the reference location and the map data from the map database 123a or 123b, the server 125 or a mobile device 122 calculates offset values for each lane of traffic for the intersection. The reference location and offset values are used to generate a MAP message.

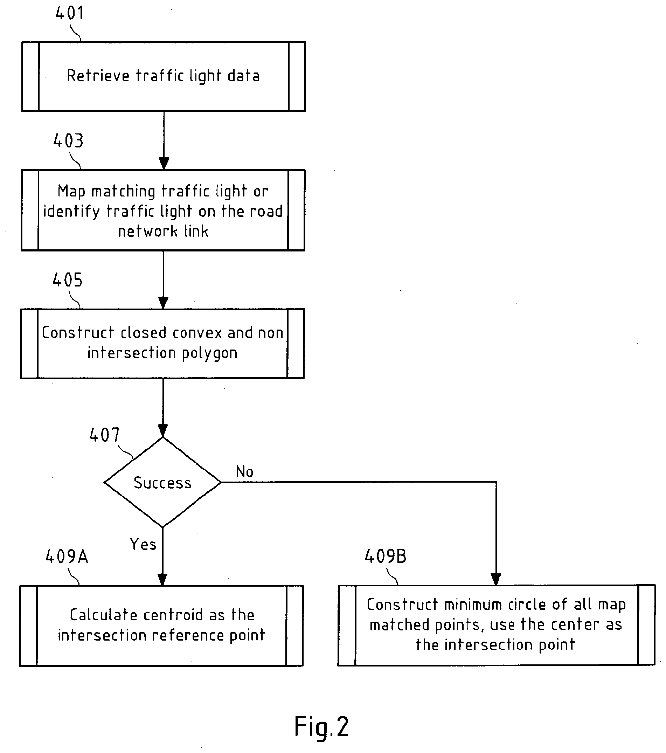

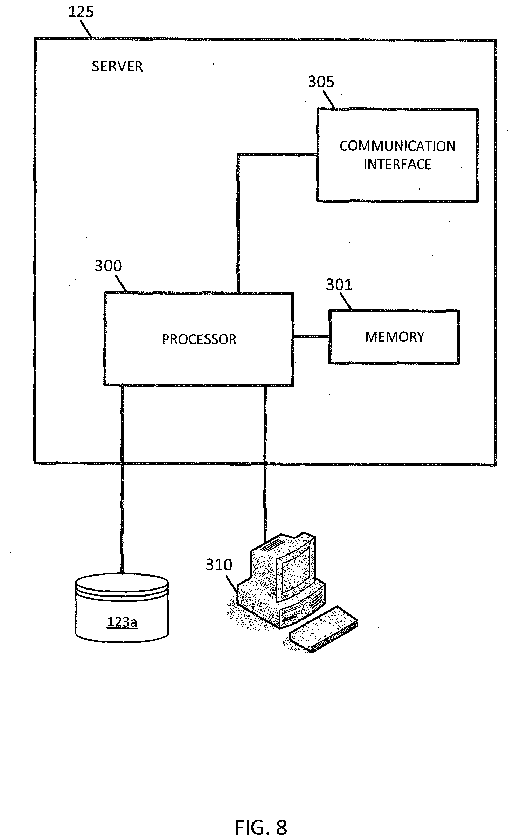

Figure 2 is an example flowchart for calculating the reference point of an intersection. The method is implemented by the system of figure 1, 8 (discussed below), 10 (discussed below) and/or a different system. Additional, different or fewer acts may be provided. The method is provided in the order shown. Other orders may be provided and/or acts may be repeated or performed in parallel.

At act 401, traffic light data is retrieved. For example, the position of each traffic light in an intersection is retrieved. At act 403, map data for the intersection is matched with the traffic light data. For example, the traffic light data is matched with the closest road link segments from the corresponding map data for the intersection. The position of the traffic lights with respect to the map data may be used to calculate a MAP reference point for the intersection.

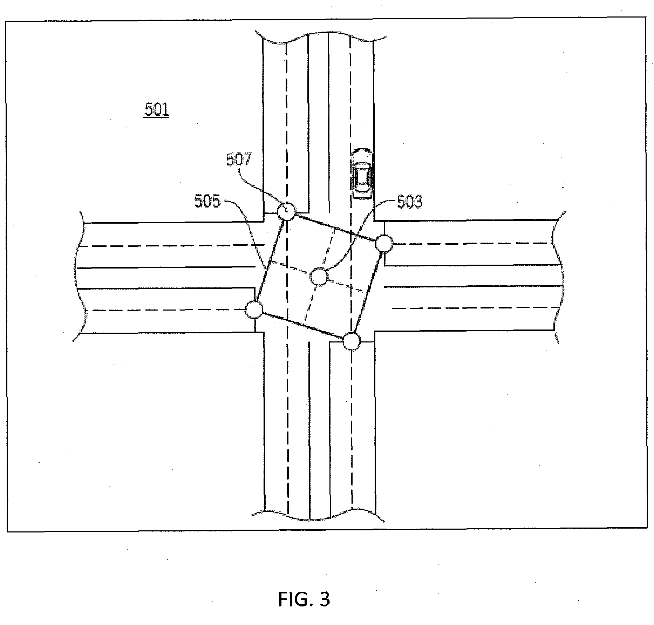

At act 405, a polygon is constructed based on the traffic light data. For example, figure 3 illustrates an example of calculating the reference point 503 of an intersection 501 using a polygon 505. Figure 3 depicts a polygon 505 consisting of four traffic lights 507, where each traffic light 507 is used as a vertex of the polygon 505. Each traffic light 507 may be assigned coordinates, such $(x_0,y_0)$, $(x_1,y_1)$, $(x_2,y_2)$ and $(x_3,y_3)$. For example, the coordinates may be the longitude and latitude of the location of the traffic lights 507. Using the coordinates of the traffic lights 507, a polygon 505 is constructed with each vertex representing the map matching point of a traffic light. In this example, the polygon is a closed convex polygon and a non-self-intersecting polygon. A closed convex polygon is defined as a polygon with interior angles of less than 180°. Additional, fewer or different numbers of traffic lights and polygon geometries may be used. For example, a polygon consisting of N vertices, with coordinates $(x_0,y_0)$, $(x_1,y_1)$, ... , $(x_{n-1},y_{n-1})$.

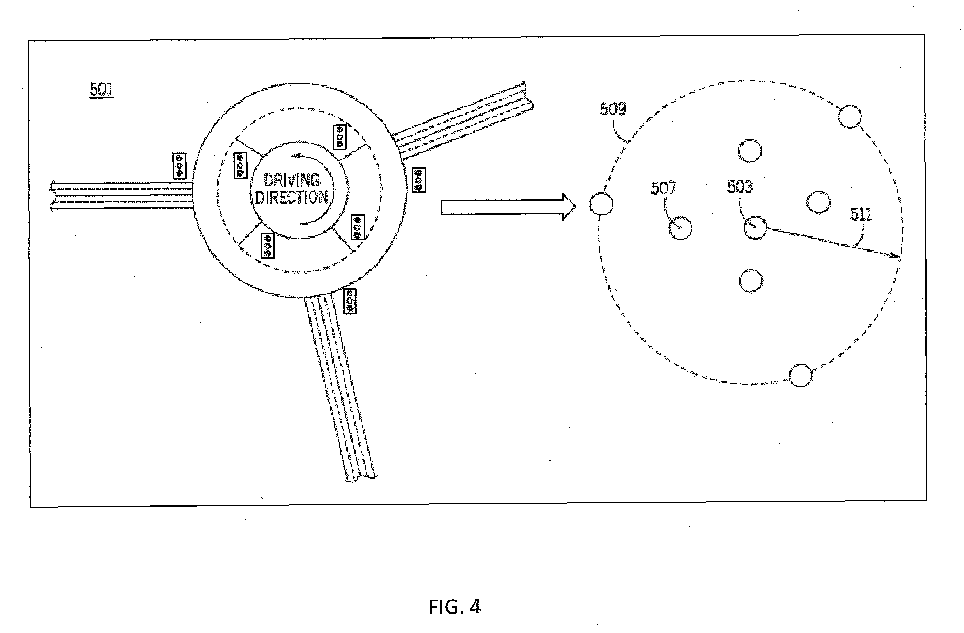

At act 407, a check is performed to determine whether a closed polygon was constructed for the intersection. For example, referring to figure 3, the locations of each traffic light 507 are connected to construct the polygon 505. For some intersections, a closed polygon cannot be constructed using the traffic light locations. For example, referring to figure 4, a closed polygon 505 cannot be constructed for the traffic lights 507.

At act 409A, if a closed polygon was constructed, a centroid of the polygon is calculated as the reference point of the intersection. For example, the area and center point of the polygon may be calculated using equations 1-3.

$$A = \frac{1}{2}\left|\sum_{i=0}^{n}(x_i y_{i+1} - x_{i+1} y_i)\right| \qquad \text{(Eq. 1)}$$

$$C_x = \frac{1}{6A}\sum_{i=0}^{n}(x_i + x_{i+1})(x_i y_{i+1} - x_{i+1} y_i) \qquad \text{(Eq. 2)}$$

$$C_y = \frac{1}{6A}\sum_{i=0}^{n}(y_i + y_{i+1})(x_i y_{i+1} - x_{i+1} y_i) \qquad \text{(Eq. 3)}$$

Additional or different formulas may be used to determine the reference point of the intersection.

At act 409B, if a closed polygon was not constructed, a circle is constructed surrounding each traffic light location. Figure 4 illustrates an example of calculating the reference point 503 of an intersection using a circle 509. For an intersection 501 with traffic lights 507 located at coordinates $(x_0,y_0)$, $(x_1,y_1)$, ... , $(x_{n-1},y_{n-1})$, a circle 509 may be constructed around the traffic lights 507. Figure 4 depicts an intersection 501 which has seven traffic lights 507. For example, the smallest or minimum circle 509 that contains all points in the Euclidean plane may be constructed, such as the seven traffic lights 507. Using the constructed circle 509, the reference location 503 for the intersection may be calculated as the center of the circle 509. As depicted in figure 4, the reference point 503 is calculated as the center of the minimum circle 509 containing all seven map matched points associated with the seven traffic lights 507. Alternately, other different geometric shapes may be constructed to calculate the reference location for the intersection.

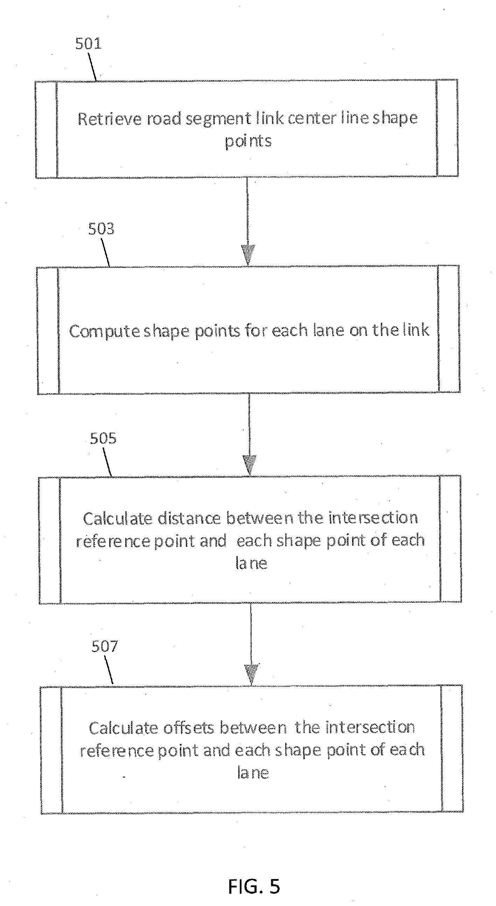

Figure 5 is an example flowchart for calculating offset values from the reference point for each lane of the intersection. For example, the flowchart provides acts for calculating offset values from the intersection reference point to one or more shape points for each lane of the intersection. The method is implemented by the system of figure 1, 8 (discussed below), 10 (discussed below) and/or a different system. Additional, different or fewer acts may be provided. The method is provided in the order shown. Other orders may be provided and/or acts may be repeated or performed in parallel.

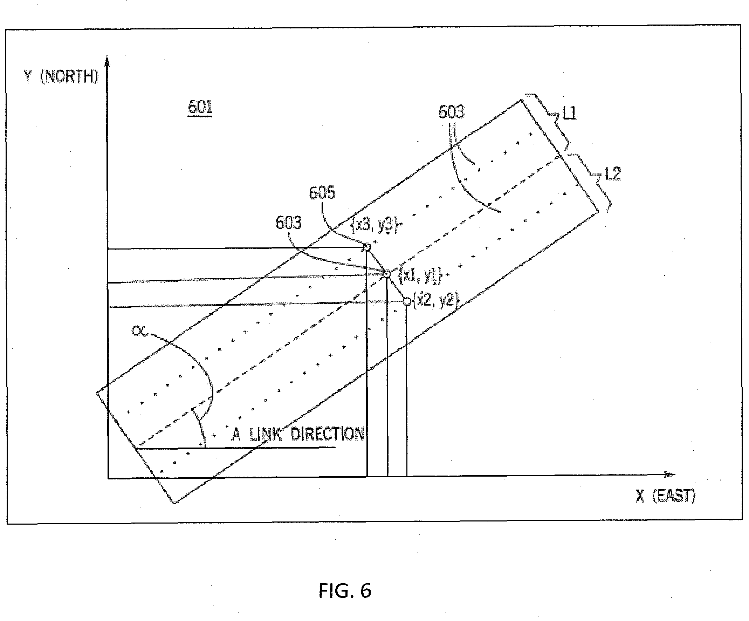

At act 501, road segment link center line points are retrieved. The center line points may be referred to as shape points. For example, a center line shape point for a road segment link with two lanes may be on the traffic line dividing the two lanes. In a three lane road segment link, the center line shape point may be in the center of the middle lane. Alternatively, based on the geometry of the road segment link, center line shape points are calculated. Information is retrieved indicating how many lanes of traffic for each road segment link and the width of each lane. Using this information, center line shape points are defined for each road segment link. Figure 6 illustrates an example of shape points for a road segment link. Figure 6 depicts an X-axis is pointing east and a Y-axis pointing north. For example, the road segment link 601 includes two lanes of traffic 603, Lane 1 and Lane 2. Lane 1 has a width of L1 and Lane 2 has a width of L2. Using this information, a center line shape point 605 is determined to be at coordinate $(x_1, y_1)$. This act is repeated for each road link segment where a traffic light is map matched, defining a plurality of center line shape points. Further, additional line shape points may be retrieved or calculated for each of the road line segments. For example, as the complexity of the road segment link increases, more line shape points may be used.

At act 503, shape points are calculated for each lane of the road segment link. For example, center line shape point coordinates are calculated for each lane of the road segment link using the information from act 501. Figure 6 also illustrates an example of shape points for each lane of the road segment link. For example, the road segment link 601 includes two lanes of traffic 603, Lane 1 and Lane 2. Lane 1 has a width of L1 and Lane 2 had a width of L2. Using this information, a center line shape point 605 is determined to be $(x_3, y_3)$ for Lane 1 and $(x_2, y_2)$ for Lane 2.

Referring to figure 6, the center line shape points 605 for Lane 1 and Lane 2 may be calculated using the road link segment direction a, the lane index number n counting from the link center line, the road segment link shape points $(x_1, y_1)$, lane widths L1 and L2, and equations 4-7.

$$x2 = x1 + n \left(\frac{L2}{2}\right) \sin \alpha \qquad \text{(Eq. 4)}$$

$$y2 = y1 - n \left(\frac{L2}{2}\right) \cos \alpha \qquad \text{(Eq. 5)}$$

$$x3 = x1 - n \left(\frac{L1}{2}\right) \sin \alpha \qquad \text{(Eq. 6)}$$

$$y3 = y1 + n \left(\frac{L1}{2}\right) \cos \alpha \qquad \text{(Eq. 7)}$$

For example, referring to the example depicted in figure 6, n is 1 because there is only 1 lane on each side of the link center line. The road link segment direction $\alpha$ is the angle measured from the center of the road segment link to the X-axis pointing east. Additional or different formulas may be used to calculate center line shape points. Further, additional line shape points may be retrieved or calculated for each of the road line segments. For example, as the complexity of the road segment link lanes increases, more line shape points may be used.

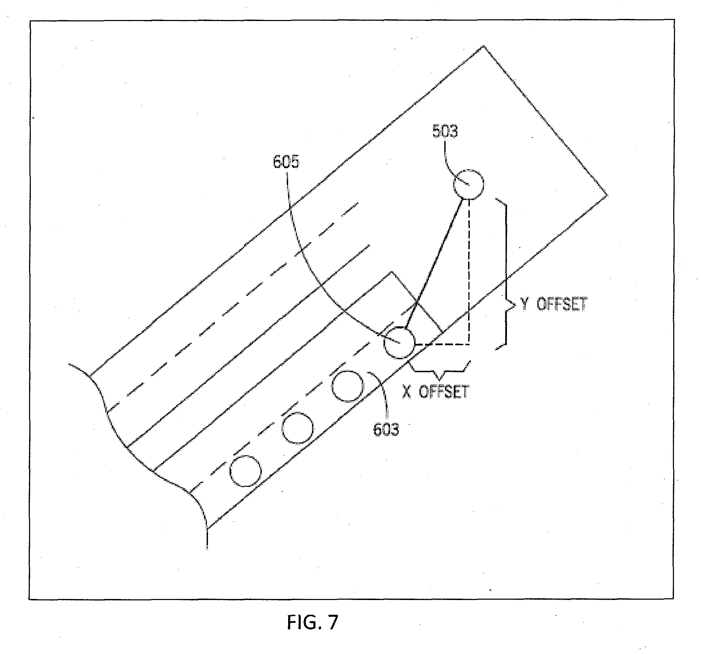

At act 505, using the center line shape points for each lane, the distance from reference point to each shape point is calculated. At act 507, offset values for each shape point from the reference point are calculated lane. For example, figure 7 illustrates an example of calculating offset values for a shape point 605 of a lane 603 of the intersection. Referring to figure 7, the offset values from the intersection reference point 503 are calculated using the haversine formula. Additional or different formulas may be used to calculate center line shape points. Offset values are calculated to each drivable lane in the road segment link. The reference point and offset values may be used to describe the road geometry and the distance to intersection in the MAP message with an accuracy of a few centimeters to facilitate use applications while a vehicle or mobile user is approaching to an intersection. Alternatively, a MAP message may be generated using the reference point location and a plurality of shape point locations (e.g., latitude, longitude, and altitude).

Figure 8 illustrates an example server device according to an embodiment. The server 125 includes a processor 300, a communication interface 305, and a memory 301. Additional, different, or fewer components may be provided. The processor 300 may be any processor suitable for the execution of a computer program include, by way of example, both general and special purpose microprocessors, and one or more processors of any kind of digital computer. Generally, a processor receives instructions and data from a read only memory, a random access memory or both. The server 125 may be coupled to a database 123a and a workstation 310. Additional, different, or fewer components may be provided. The workstation 310 may be used by a user to access the server 125. The database 123a may store map or other geographic data, and information collected by mobile devices 122 (e.g., vehicle and environmental parameters).

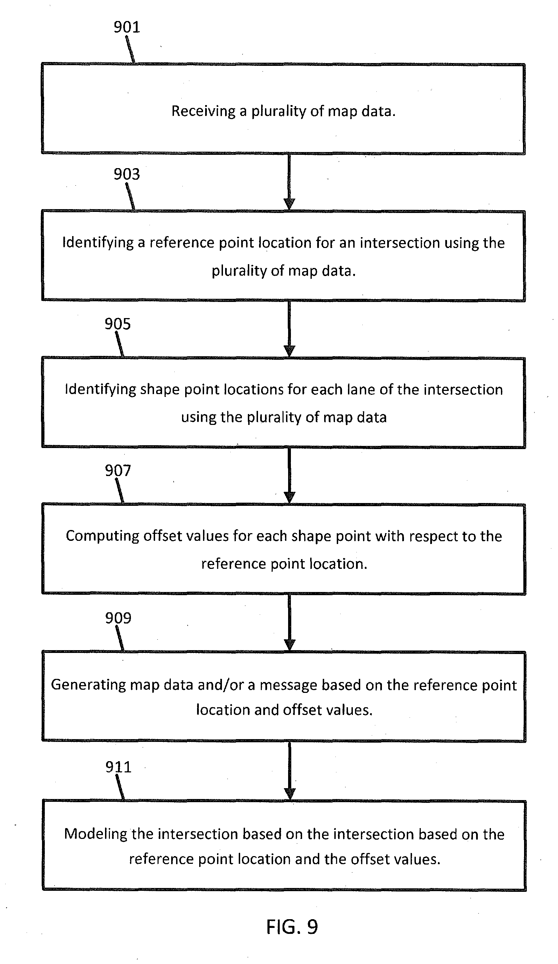

Figure 9 illustrates an example flowchart for the server device of Figure 8 according to an embodiment. Additional, different or fewer acts may be provided. The method is provided in the order shown. Other orders may be provided and acts may be repeated or performed in parallel.

At act 901, map data for an intersection is received. The map data includes road link segment data and traffic light data. The map data may also include road link attribute information and other relevant information for the intersection. The traffic light data may include the location of each traffic light and the position of each traffic light with respect to the road segment links. The traffic light data may be registered with the map data, or the traffic light data may be registered with map data in a separate act. The signal phase and timing information of each traffic light may also be included, or may be obtained through the distribution sources for an intersection or set of intersections.

At act 903, a reference point location is calculated for the intersection from the map data. A reference point location is identified for the intersection with respect to the map data using the registered traffic light position data. For example, the traffic light locations are identified for the intersection based on the traffic light data and the reference point location is calculated using the identified traffic light locations. In an embodiment, a closed convex polygon is constructing using each traffic light location as a vertex of polygon. Using the closed convex polygon, the reference point location calculated as the centroid of the closed convex polygon. For example, the closed convex polygon may be a non-self-intersecting convex polygon with interior angles of less than 180 degrees. Alternatively, in another embodiment, a circle is constructed with the smallest diameter possible that contains each of the identified traffic light locations. In this embodiment, the reference point location is calculated as the center of the circle.

Alternatively, an additional act may be performed determining whether a closed convex polygon can be constructing using the plurality of traffic light locations as vertices. If a closed convex polygon can be constructed, the reference point location is calculated as discussed above with respect to the closed polygon. If a closed convex polygon cannot be constructed, the reference point location is calculated as discussed above using a minimum circle containing each of plurality of traffic light locations.

At act 905, shape point locations are identified for each lane of the intersection using the map data. For example, the shape point locations are centerline locations for each lane of the intersection. In an embodiment, a set number of shape point locations are identified for each lane. In another embodiment, the number of identified shape point locations varies depending on the on the curvature and/or complexity of each lane. At act 907, a distance is calculated from each shape point location to the reference point location.

At act 909, offset values for each shape point location are computed. For example, the offset values are calculated using the reference point location, each shape point location and the calculated distance between reference point location and the shape point location. In one embodiment, the offset values are calculated using haversine formulas.

At act 911, a MAP message is generated based on the reference point location and the offset values. For example, a MAP message is generated by encoding the reference point location and offset values using the SAE J2735 MAP format.

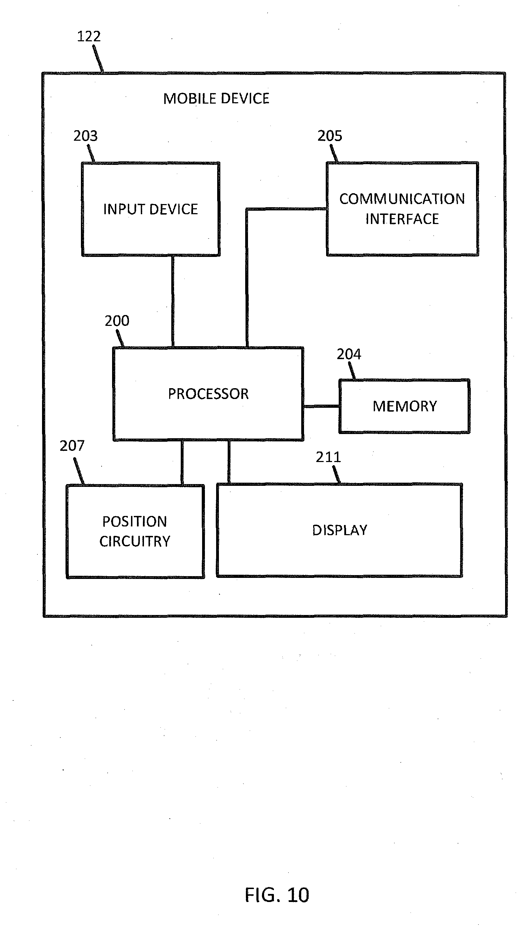

Figure 10 illustrates an example mobile device according to an embodiment. The mobile device 122 includes a processor 200, a memory 204, an input device 203, a communication interface 205, position circuitry 207, and a display 211. Additional, different, or fewer components are possible for the mobile device 122.

The processor 200 may be any processor suitable for the execution of a computer program include, by way of example, both general and special purpose microprocessors, and anyone or more processors of any kind of digital computer. Generally, a processor receives instructions and data from a read only memory, a random access memory or both.

The positioning circuitry 207 may include a Global Positioning System (GPS), Global Navigation Satellite System (GLONASS), or a cellular or similar position sensor for providing location data. The positioning system may utilize GPS-type technology, a dead reckoning-type system, cellular location, or combinations of these or other systems. The positioning circuitry 207 may include suitable sensing devices that measure the traveling distance, speed, direction, and so on, of the mobile device 122. The positioning system may also include a receiver and correlation chip to obtain a GPS signal. Alternatively or additionally, the one or more detectors or sensors may include an accelerometer built or embedded into or within the interior of the mobile device 122. The accelerometer is operable to detect, recognize, or measure the rate of change of translational and/or rotational movement of the mobile device 122. The mobile device 122 receives location data from the positioning system. The location data indicates the location of the mobile device 122.

The input device 203 may be one or more buttons, keypad, keyboard, mouse, stylist pen, trackball, rocker switch, touch pad, voice recognition circuit, or other device or component for inputting data to the mobile device 100. The input device 203 and the display 211 may be combined as a touch screen, which may be capacitive or resistive. The display 211 may be a liquid crystal display (LCD) panel, light emitting diode (LED) screen, thin film transistor screen, or another type of display.

The controller 200 and/or processor 200 may include a general processor, digital signal processor, an application specific integrated circuit (ASIC), field programmable gate array (FPGA), analog circuit, digital circuit, combinations thereof, or other now known or later developed processor. The controller 200 and/or processor 200 may be a single device or combinations of devices, such as associated with a network, distributed processing, or cloud computing.

The memory 204 and/or memory 301 may be a volatile memory or a non-volatile memory. The memory 204 and/or memory 301 may include one or more of a read only memory (ROM), random access memory (RAM), a flash memory, an electronic erasable program read only memory (EEPROM), or other type of memory. The memory 204 and/or memory 301 may be removable from the mobile device 122, such as a secure digital (SD) memory card.

The communication interface 205 and/or communication interface 305 may include any operable connection.

An operable connection may be one in which signals, physical communications, and/or logical communications may be sent and/or received. An operable connection may include a physical interface, an electrical interface, and/or a data interface. The communication interface 205 and/or communication interface 305 provides for wireless and/or wired communications in any now known or later developed format.

The mobile device 122 may be assisted driving vehicles. Assisted driving vehicles include autonomous vehicles, highly assisted driving (HAD), and advanced driving assistance systems (ADAS). Any of these assisted driving systems may be incorporated into mobile device 122. Alternatively, an assisted driving device may be included in the vehicle. The assisted driving device may include memory, a processor, and systems to communicate with the mobile device 122.

The term autonomous vehicle may refer to a self-driving or driverless mode in which no passengers are required to be on board to operate the vehicle. An autonomous vehicle may be referred to as a robot vehicle or an automated vehicle. The autonomous vehicle may include passengers, but no driver is necessary. These autonomous vehicles may park themselves or move cargo between locations without a human operator. Autonomous vehicles may include multiple modes and transition between the modes. The autonomous vehicle may steer, brake, or accelerate the vehicle based on the intersection MAP message.

A highly assisted driving (HAD) vehicle may refer to a vehicle that does not completely replace the human operator. Instead, in a highly assisted driving mode, the vehicle may perform some driving functions and the human operator may perform some driving functions. Vehicles may also be driven in a manual mode in which the human operator exercises a degree of control over the movement of the vehicle. The vehicles may also include a completely driverless mode. Other levels of automation are possible. The HAD vehicle may control the vehicle through steering or braking in response to the intersection MAP message.

Similarly, ADAS vehicles include one or more partially automated systems in which the vehicle alerts the driver. The features are designed to avoid collisions automatically. Features may include adaptive cruise control, automate braking, or steering adjustments to keep the driver in the correct lane. ADAS vehicles may issue controls for these feature in response to the intersection MAP message.

Driving assistance may be provided based on an array of sensors that may include any combination of a brake sensor, a steering sensor, an environment sensor, a vehicle sensor, an optical sensor, and an inertial sensor. Additional, different, or fewer sensors may be used.

The brake sensor may be a brake pedal sensor that detects displacement of the brake pedal of the vehicle. The brake sensor may detect the actuation of the brake pads near the wheel of the vehicle. The brake sensor may be a circuit that detects operation of the brakes through an anti-lock brake system. The steering sensor may be a steering wheel sensor that detects movement of the steering wheel of the vehicle. The steering sensor may detect the angle of the steering wheel. The steering sensor may detect the angle of the front wheel of the vehicle. The environment sensor may detect the environment of the vehicle. The environment sensor may include a weather sensor such as a thermometer, barometer, or a rain sensor. The rain sensor may detect the movement of windshield wipers. The vehicle sensor may detect an operation of the vehicle. The vehicle sensor may include a throttle sensor that measures a position of a throttle of the engine or a position of an accelerator pedal, a speedometer sensor, or a tachometer sensor. The vehicle sensor may detect a malfunction of the vehicle. For example, the vehicle sensor may be a tire pressure sensor. The optical sensor may include a camera, a LiDAR device, a proximity sensor, or another sensor configured to detect distances to nearby objects or when a nearby object exists. The optical sensor may send a signal that reflects off another object and is detected by the optical sensor. The inertial sensor may include an inertial measurement unit (IMU) including one or more of an accelerometer, a gyroscope, and a magnetic sensor. The inertial sensor may generate data indicative of the acceleration, deceleration, rotational acceleration, and rotation deceleration experienced by the vehicle.

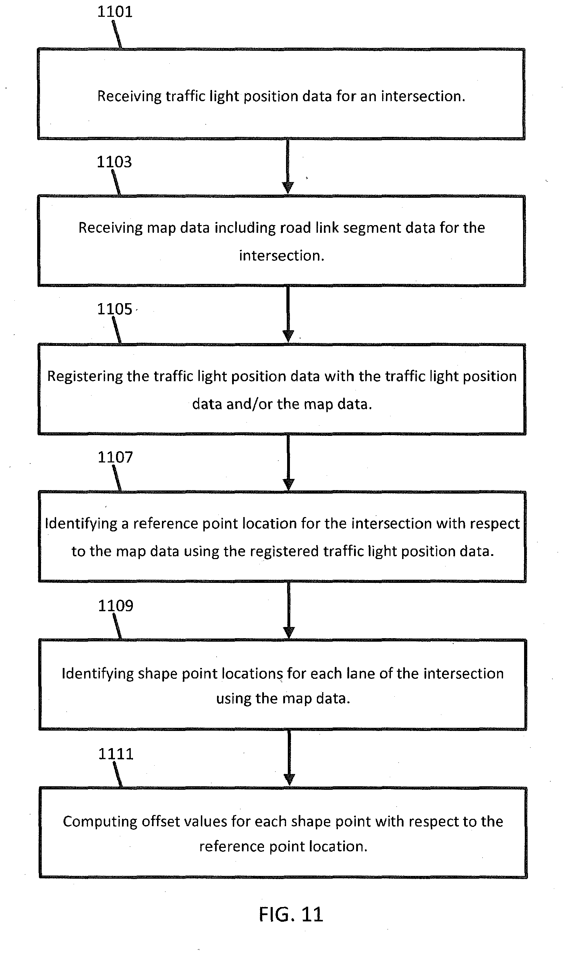

Figure 11 illustrates an example flowchart for the mobile device of Figure 10 according to an embodiment. Additional, different or fewer acts may be provided. The method is provided in the order shown. Other orders may be provided and acts may be repeated or performed in parallel.

At act 1101, traffic light position data is received for an intersection. At act 1103, map data including road link segment data is received for the intersection. At act 1105, the traffic light position data is registered with the map data.

At act 1107, a reference point location for the intersection is identified using the traffic light position data and/or the plurality of map data. For example, either a polygon (e.g., closed convex polygon) or a circle (e.g., minimum circle) is constructed using the traffic light locations as vertices of the polygon or the boundaries of the circle In this example, the centroid of the polygon or the center of the is identified as the reference point location for the intersection. In an embodiment, the reference point location is identified using a minimum circle only when a closed convex polygon cannot be constructed.

At act 1109, shape point locations are identified for each lane of the intersection using the plurality of map data. At act 1111, offset values are computed for each shape point with respect to the reference point location. For example, a distance is calculated from each shape point location to the reference point location and the offset values are calculated using the reference point location, the shape point locations, the calculated distances and one or more formulas (e.g., haversine formulas).

Referring back to figure 1, map databases, such as geographic databases 123a and 123b, are used in computer-based systems that provide useful features to users. For example, map databases are used for the identification of routes to destinations or points of interest. A navigation system determines the optimum route to be taken by the end user to travel from the origin to the destination location from map data stored in a geographic (or map) database. Map databases are also used in advanced driver assistance systems, such as curve warning systems, adaptive cruise control systems and headlight aiming systems. Map databases are also used in systems that improve vehicle fuel economy, such as systems that optimize transmission gear selection taking into account upcoming slope and speed changes.

As shown in Figure 1, a master copy of the geographic database 123a may be stored at the server 125, and a local copy of the geographic database 123b may be stored at the mobile device 122. In one example, the local copy of the database 123b is a full copy of the geographic database, and in another example, the local copy of the database 123b may be a cached or partial portion of the geographic database. The cached portion may be defined based on a geographic location of the mobile device 122 or a user selection made at the mobile device 122. The geographic databases 123a and 123b may be a geographic database including road links or segments. Additional, different, or fewer components may be provided.

The geographic databases 123a and 123b may store or maintain geographic data such as, for example, road segment or link data records and node data records. The geographic databases 123a and 123b may also store or maintain one or more look-aside tables (LAT). The link data records are links or segments representing the roads, streets, or paths. The node data records are end points (e.g., intersections) corresponding to the respective links or segments of the road segment data records. The road link data records and the node data records may represent, for example, road networks used by vehicles, cars, and/or other entities.

Each road segment may be associated with two nodes (e.g., one node represents the point at one end of the road segment and the other node represents the point at the other end of the road segment). The node at either end of a road segment may correspond to a location at which the road meets another road, i.e., an intersection, or where the road dead-ends. Each road segment may be associated with zero or more shape points. Shape points are an ordered sequence of vertices that indicate the shape of the road as a polyline between the nodes. The road shape may also be represented by an analytical curve such as a B-spline, Bezier curve, Clothoid curve or other curve types. The road segments may include sidewalks and crosswalks for travel by pedestrians.

Each of the road segments or links may be associated with various attributes or features stored in lists that are not byte aligned. The road segment data record may include data that indicate a speed limit or speed category (i.e., the maximum permitted vehicular speed of travel) on the represented road segment. The road segment data record may also include data that indicate a classification such as a rank of a road segment that may correspond to its functional class. The road segment data may include a segment ID by which the data record can be identified in the geographic database 123. The road segment data, nodes, segment IDs, attributes, fields, and other data may be organized in data structures described above.

The road segment data may include data identifying what turn restrictions exist at each of the nodes which correspond to intersections at the ends of the road portion represented by the road segment, the name or names by which the represented road segment is known, the length of the road segment, the grade of the road segment, the street address ranges along the represented road segment, the permitted direction of vehicular travel on the represented road segment, whether the represented road segment is part of a controlled access road (such as an expressway), a ramp to a controlled access road, a bridge, a tunnel, a toll road, a ferry, and so on. The additional road segment data may be organized in data tree structures. Alternatively, the data tree structures may be included in a separate database, for example, internal to the server 125 and/or the mobile device 122, or at an external location.

The server 125 may send map updates to the mobile device 122. The server 125 may update a particular tile of the geographic database 123. The server 125 may send updates to the master copy of the geographic database 123a and/or send updates to the local copy of the geographic database 123b. The server 125 may generate an update script or patch file for the navigation data and transmit the update script or patch file to the mobile device 122 to update the local copy of the database 123b.

The mobile device 122 may be a personal navigation device ("PND"), a portable navigation device smart phone, a mobile phone, a personal digital assistant ("PDA"), a tablet computer, a notebook computer, and/or any other known or later developed mobile device or personal computer. The mobile device 122 may also be an automobile head unit, infotainment system, and/or any other known or later developed automotive navigation system. Non-limiting embodiments of navigation devices may also include relational database service devices, mobile phone devices, car navigation devices, and navigation devices used for air or water travel.

The mobile device 122 may be configured to execute routing algorithms to determine an optimum route to travel along a road network from an origin location to a destination location in a geographic region. Using input from the end user, the mobile device 122 examines potential routes between the origin location and the destination location to determine the optimum route. The mobile device 122 may then provide the end user with information about the optimum route in the form of guidance that identifies the maneuvers required to be taken by the end user to travel from the origin to the destination location. Some mobile devices show detailed maps on displays outlining the route, the types of maneuvers to be taken at various locations along the route, locations of certain types of features, and so on.

The computing resources may be divided between the server 125 and the mobile device 122. In some embodiments, the server 125 performs a majority of the processing. In other embodiments, the mobile device 122 performs a majority of the processing. In addition, the processing may be divided substantially evenly between the server 125 and the mobile device 122.

The map developer system in server 125 and the mobile device 122 are coupled with the network 127. The phrase "coupled with" is defined to mean directly connected to or indirectly connected through one or more intermediate components. Such intermediate components may include hardware and/or software-based components. Many mobile devices 122 may connect with the network 127.

The network 127 may include wired networks, wireless networks, or combinations thereof. The wireless network may be a cellular telephone network, an 802.11, 802.16, 802.20, or WiMax network. Further, the network 127 may be a public network, such as the Internet, a private network, such as an intranet, or combinations thereof, and may utilize a variety of networking protocols now available or later developed including, but not limited to TCP/IP based networking protocols.

The term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein.

In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored. These examples may be collectively referred to as a non-transitory computer readable medium.

In an alternative embodiment, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

As used in this application, the term 'circuitry' or 'circuit' refers to all of the following: (a)hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

Processors suitable for the execution of a computer program include, by way of example, both general and special purpose microprocessors, and anyone or more processors of any kind of digital computer. Generally, a processor receives instructions and data from a read only memory or a random access memory or both. The essential elements of a computer are a processor for performing instructions and one or more memory devices for storing instructions and data. Generally, a computer also includes, or is operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a device having a display, e.g., a CRT (cathode ray tube) or LCD (liquid crystal display) monitor, or projector, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

**Claims**

1.   A method for generating a MAP message describing the static physical geometry layout of one or more intersections, the method comprising:

receiving (401), over a network (127), map data for an intersection (501);

calculating (409A, 409B), using a processor, a reference point location of a reference point (503) for the intersection (501) from the map data;

calculating, using the processor, offset values relative to the reference point location for a plurality of lanes (603) of the intersection from the map data, so as to define the physical structure of the lanes leading to and away from the reference point of the intersection; and

generating (911) the MAP message using the reference point location and offset values.

2. The method of claim 1, wherein the map data comprises traffic light data, the traffic light data being used for calculating the reference point location for the intersection (501).

3. The method of claim 2, wherein calculating the reference point comprises:

identifying, using the processor, traffic light locations for each traffic light (507) in the intersection based on the traffic light data; and

calculating the reference point location for the intersection using the identified traffic light locations.

4. The method of claim 3, wherein calculating the reference point comprises:
constructing (405, 409A) a closed convex polygon (505), wherein each vertex of the closed convex polygon is one of the identified traffic light locations, wherein the reference point location is a centroid of the closed convex polygon.

5. The method of claim 4, wherein the closed convex polygon comprises a non-self-intersecting convex polygon with interior angles of less than 180 degrees.

6. The method of claim 3, wherein calculating the reference point comprises:
constructing (409B) a circle (509) with the smallest diameter that contains each of the identified traffic light locations, wherein the reference point location is a center of the circle.

7. An apparatus comprising:

at least one processor (200, 300); and

at least one memory (204, 301) including computer program code for one or more programs, the at least one memory and the computer program code configured to, with the at least one processor, cause the apparatus to at least perform a method according to any of the claims 1 to 6.

8. A non-transitory computer readable medium including instructions that when executed are operable to perform a method according to any of claim 1 to 6.


**Patentansprüche**

1. Verfahren zum Erzeugen einer MAP-Nachricht, die das statische physikalische Geometrie-Layout einer oder mehrerer Kreuzungen beschreibt, wobei das Verfahren umfasst:

Empfangen (401), über ein Netzwerk (127), von Kartendaten für eine Kreuzung (501);

Berechnen (409A, 409B), unter Verwendung eines Prozessors, einer Referenzpunktposition eines Referenzpunktes (503) für die Kreuzung (501) aus den Kartendaten;

Berechnen, unter Verwendung des Prozessors, von Versatzwerten relativ zu der Referenzpunktposition für eine Mehrzahl von Fahrspuren (603) der Kreuzung aus den Kartendaten, um die physikalische Struktur der Fahrspuren zu definieren, die zu dem Referenzpunkt der Kreuzung hin und von ihm weg führen; und

Erzeugen (911) der MAP-Nachricht unter Verwendung der Referenzpunktposition und der Versatzwerte.

2. Verfahren nach Anspruch 1, wobei die Kartendaten Ampeldaten umfassen, wobei die Ampeldaten zum Berechnen der Referenzpunktposition für die Kreuzung (501) verwendet werden.

3. Verfahren nach Anspruch 2, wobei das Berechnen des Referenzpunktes umfasst:

Identifizieren, unter Verwendung des Prozessors, von Ampelpositionen für jede Ampel (507) in der Kreuzung basierend auf den Ampeldaten; und

Berechnen der Referenzpunktposition für die Kreuzung unter Verwendung der identifizierten Ampelpositionen.

4. Verfahren nach Anspruch 3, wobei das Berechnen des Referenzpunktes umfasst:
Konstruieren (405, 409A) eines geschlossenen konvexen Polygons (505), wobei jeder Eckpunkt des geschlossenen konvexen Polygons eine der identifizierten Ampelpositionen ist, wobei die Referenzpunktposition ein Schwerpunkt des geschlossenen konvexen Polygons ist.

5. Verfahren nach Anspruch 4, wobei das geschlossene konvexe Polygon ein sich nicht selbst schneidendes konvexes Polygon mit Innenwinkeln von weniger als 180 Grad umfasst.

6. Verfahren nach Anspruch 3, wobei das Berechnen des Referenzpunktes umfasst:
Konstruieren (409B) eines Kreises (509) mit dem kleinsten Durchmesser, der jede der identifizierten Ampelpositionen enthält, wobei die Referenzpunktposition ein Mittelpunkt des Kreises ist.

7. Vorrichtung, umfassend:

mindestens einen Prozessor (200, 300); und

mindestens einen Speicher (204, 301), der Computerprogrammcode für ein oder

mehrere Programme enthält, wobei der mindestens eine Speicher und der Computerprogrammcode so konfiguriert sind, dass sie mit dem mindestens einen Prozessor die Vorrichtung zumindest dazu veranlassen, ein Verfahren nach einem der Ansprüche 1 bis 6 durchzuführen.

8. Nicht-transitorisches computerlesbares Medium, das Befehle enthält, die, wenn sie ausgeführt werden, dazu betriebsfähig sind, ein Verfahren nach einem der Ansprüche 1 bis 6 durchzuführen.


**Revendications**

1. Procédé pour la génération d'un message MAP décrivant la disposition géométrique physique statique d'une ou plusieurs intersections, le procédé comprenant :

la réception (401), sur un réseau (127), de données cartographiques pour une intersection (501) ;

le calcul (409A, 409B), en utilisant un processeur, d'un emplacement de point de référence d'un point de référence (503) pour l'intersection (501) à partir des données cartographiques ;

le calcul, en utilisant le processeur, de valeurs de décalage relatif à l'emplacement de point de référence pour une pluralité de voies (603) de l'intersection à partir des données cartographiques, afin de définir la structure physique des voies menant au et

s'éloignant du point de référence de l'intersection ; et

la génération (911) du message MAP en utilisant l'emplacement de point de référence et

les valeurs de décalage.

2. Procédé selon la revendication 1, dans lequel les données cartographiques comprennent des données de feux de circulation, les données de feux de circulation étant utilisées pour le calcul de l'emplacement de point de référence pour l'intersection (501).

3. Procédé selon la revendication 2, dans lequel le calcul du point de référence comprend :

l'identification, en utilisant le processeur, des emplacements de feux de circulation pour chaque feu de circulation (507) dans l'intersection sur la base des données de feux de circulation ; et

le calcul de l'emplacement de point de référence pour l'intersection en utilisant les emplacements de feux de circulation identifiés.

4. Procédé selon la revendication 3, dans lequel le calcul du point de référence comprend :
la construction (405, 409A) d'un polygone convexe fermé (505), dans lequel chaque vertex du polygone convexe fermé est l'un des emplacements de feux de circulation identifiés, dans lequel l'emplacement de point de référence est un centroïde du polygone convexe fermé.

**5.** Procédé selon la revendication 4, dans lequel le polygone convexe fermé comprend un polygone convexe non auto-recoupant avec des angles intérieurs inférieurs à 180 degrés.

**6.** Procédé selon la revendication 3, dans lequel le calcul du point de référence comprend :
la construction (409B) d'un cercle (509) avec le plus petit diamètre qui contient chacun des emplacements de feux de circulation identifiés, dans lequel l'emplacement de point de référence est un centre du cercle.

**7.** Un appareil comprenant :

au moins un processeur (200, 300) ; et
au moins une mémoire (204, 301) comprenant un code de programme informatique pour un ou plusieurs programmes, l'au moins une mémoire et le code de programme informatique étant configurés pour, avec l'au moins un processeur, amener l'appareil à au moins exécuter un procédé selon l'une quelconque des revendications 1 à 6.

**8.** Support lisible par ordinateur non transitoire comprenant des instructions qui, lorsqu'elles sont exécutées, sont opérables pour exécuter un procédé selon l'une quelconque des revendications 1 à 6.

SERVER
125

123a

NETWORK
127

MOBILE DEVICE

122

MOBILE DEVICE

122

. . . . .

123b

120

123b

FIG. 1

401

Retrieve traffic light data

403

Map matching traffic light or identify traffic light on the road network link

405

Construct closed convex and non intersection polygon

407

Success

No

Yes

409A

Calculate centroid as the intersection reference point

409B

Construct minimum circle of all map matched points, use the center as the intersection point

Fig.2

FIG. 3

FIG. 4

501

Retrieve road segment link center line shape
points

503

Compute shape points for each lane on the link

505

Calculate distance between the intersection
reference point and each shape point of each
lane

507

Calculate offsets between the intersection
reference point and each shape point of each
lane

FIG. 5

FIG. 6

FIG. 7

125

SERVER

305

COMMUNICATION
INTERFACE

300

PROCESSOR

301

MEMORY

310

123a

FIG. 8

901

Receiving a plurality of map data.

903

Identifying a reference point location for an intersection using the plurality of map data.

905

Identifying shape point locations for each lane of the intersection using the plurality of map data

907

Computing offset values for each shape point with respect to the reference point location.

909

Generating map data and/or a message based on the reference point location and offset values.

911

Modeling the intersection based on the intersection based on the reference point location and the offset values.

FIG. 9

122

MOBILE DEVICE

203

INPUT DEVICE

205

COMMUNICATION INTERFACE

200

PROCESSOR

204

MEMORY

207

POSITION CIRCUITRY

211

DISPLAY

FIG. 10

1101

Receiving traffic light position data for an intersection.

1103

Receiving map data including road link segment data for the intersection.

1105

Registering the traffic light position data with the traffic light position data and/or the map data.

1107

Identifying a reference point location for the intersection with respect to the map data using the registered traffic light position data.

1109

Identifying shape point locations for each lane of the intersection using the map data.

1111

Computing offset values for each shape point with respect to the reference point location.

FIG. 11

**EP 3 443 302 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1182611 A1